# EUROPEAN PATENT SPECIFICATION

(11) **EP 2 014 699 B1**
(45) Date of publication and mention of the grant of the patent: **02.09.2009**
(21) Application number: 07011830.2
(22) Date of filing: 15.06.2007
(51) Int. Cl.: C08G 73/06, C08J 9/00

(54) **Method of preparing organic porous solids and solids obtainable by this method**
Verfahren zur Herstellung organischer poröser Festkörper und mit diesem Verfahren herstellbare Festkörper
Procédé de préparation de solides poreux organiques et solides obtenus grâce à ce procédé

(43) Date of publication of application: 14.01.2009
(73) Proprietor: Max-Planck-Gesellschaft zur Förderung der Wissenschaften e.V., 80539 München (DE)
(72) Inventor: Antonietti, Markus, 14558 Nuthetal (DE); Thomas, Arne, 10829 Berlin (DE); Kuhn, Pierre, 14532 Kleinmachnow (DE)
(74) Representative: HOFFMANN EITLE

(56) References cited:
- WO-A-03/000774
- US-A- 3 654 192
- US-A- 3 775 380
- US-A- 4 125 513

## Description

### FIELD OF THE INVENTION

The present invention relates to a method of preparing porous solids, as well as the porous solids obtainable by that method. Due to their porosity and large specific surface area, these solids proved useful e.g. as a catalyst carrier, as materials for separation and in chromatography, electrode materials and insulating materials, briefly in all fields of application where high specific surface areas are an asset.

### BACKGROUND OF THE INVENTION

In the field of porous materials, apart from the high porosity and associated large surface area, an adjustable pore size was strongly desired.

There are many reports of inorganic materials having pores in the nanometer range in the literature. One example of microporous materials are zeolites. In the recent past, many mesoporous materials have been synthesized. The latest development in this field since the M41S family of materials was found by Mobil scientists is summarized by A. Vinu et al. in Science and Technology of Advanced Materials 2006, 7, pp. 753-771. In this review article, the synthesis of mesoporous carbonitride via replica synthesis by using, as a template, mesoporous silica SBA-15, with subsequent dissolution of the silica framework is described. More details on this type of hexagonal mesoporous carbonitride are given in Advanced Materials 2005, 17, pp. 1648-1652.

Different from inorganic materials, reports on organic materials having a regular ordered network are quite rare. Recently, the group of Yaghi prepared so called covalent organic frameworks (COFs). The condensation reaction of phenyl diboronic acid and hexahydroxytriphenylene is described in Science 2005, 310, pp. 1166-1170. The concept was extended to three-dimensional frameworks in Science 2007, 316, pp. 268-272.

Mesoporous poly(benzimidazole) with well-defined porosity and a pore diameter of 11 nm prepared by way of the hard templating approach using silica nanoparticles as a template is described in Macromolecules, 2007, 40, pp. 1299-1304. A. Fischer et al. in Advanced Materials 2007, 19, pp. 264-267 and F. Goettmann in Angewandte Chemie Int. Ed. 2006, 45, pp. 4467-4471) use nanometer size silica spheres and molten cyanamide to prepare mesoporous graphitic carbonitride. D.R. Miller et al., in J. Mater. Chem. 2002, 12, pp. 2463-2469 describe the synthesis of nitrogen-rich carbonitride powders. The structure features triazine rings connected by nitrogen atoms to form a two-dimensional polymer. A low surface area of 2 to 5 m²/g of the material is reported. This is due to macropores produced by gases evolving during the polymerization reaction.

US 3,164,555 relates to a method for producing heat resistant semi-conductor polymers comprising heating acetonitrile in an inert atmosphere in the presence of a catalyst. For instance, acetonitrile, benzonitrile and propionitrile are reacted with zinc chloride. D.R. Anderson et al., in J. Polymer Sci. A-1, 4 (1966), pp. 1689-1702 describe thermally resistant polymers containing the s-triazine ring. For instance, dicyanobiphenyl is reacted in the presence of chlorosulfonic acid.

US 4,061,856 mentions polymeric or copolymeric products containing triaryl-s-triazine rings. In Example 4 of the patent, 1,4-dicyanobenzene (terephthalonitrile) is reacted in the presence of p-toluenesulfonic acid monohydrate. However, the Brönsted acid-catalyzed polymerization of polynitriles will not yield porous polymers. This may be explained by the fact that the polymer formed is not sufficiently crosslinked allowing an efficient packing of the polymer chains without any formation of regular pores, or by the lack of any appropriate template.

US 3,775,380 pertains to the polymerization of aromatic nitriles having at least two cyano groups by heating to a temperature of from about 410 to about 550 °C in the presence of a catalyst, such as a metal chloride to form curable polymeric compositions. In the working examples of the patent, dicyanobenzenes are converted in the presence of a zinc chloride catalyst. However, due to the presence of merely catalytic amounts of zinc chloride, no porous material can be obtained. Like in the case of the acid-catalyzed polymerization, as addressed above, this may be due to the insufficient crosslinking of the framework, or by the lack of any appropriate template.

In view of the above, further organic materials exhibiting a porous network with an associated high specific surface area, which can moreover be prepared in a simple way, were in high demand.

### SUMMARY OF THE INVENTION

The present inventors have unexpectedly found that porous organic materials solids can be prepared by a simple method which comprises polymerizing, in a salt melt or an eutectic mixture of salt melt containing at least one Lewis acidic salt, cyano monomers having at least two cyano groups in their molecule, wherein the at least two cyano groups are bonded to a rigid linking group in the cyano monomer.

The present invention has been completed based on that finding. Specifically, the present invention relates to the above method, the porous solids obtainable by that method, and distinct uses of these solids. The porous solids of the invention exhibit high porosity and associated extremely high specific surface areas. As such, these materials can be used in various fields where such high surface areas are advantageous, e.g. as a sorbent material, filtering material, insulating material, or as a catalyst carrier.

### BRIEF DESCRIPTION OF THE DRAWINGS

Fig. 1 is an illustrative drawing showing the schematic formation mechanism of a porous solid obtainable in accordance with the present invention, for 1,4-dicyanobenzene as a starting compound.
Fig. 2 shows the adsorption-desorption isotherm of the material obtained in Example 1.

### DETAILED DESCRIPTION OF THE INVENTION

The preparation method in accordance with the invention involves the polymerization of cyano monomers having at least two cyano groups in their molecule, wherein the at least two cyano groups are bonded to a rigid linking group.

The term "rigid" characterizing the linking group in the cyano monomers is intended to indicate that the linking group when the cyano monomer containing the same is incorporated in the framework of the porous solid will prevent any substantial torsion or conformational change of the molecular framework. In other words, because the linking group, which will remain after the cyclotrimerization reaction to be described below, is rigid, the framework of the formed porous solid will be sufficiently stable and have a persistent pore structure.

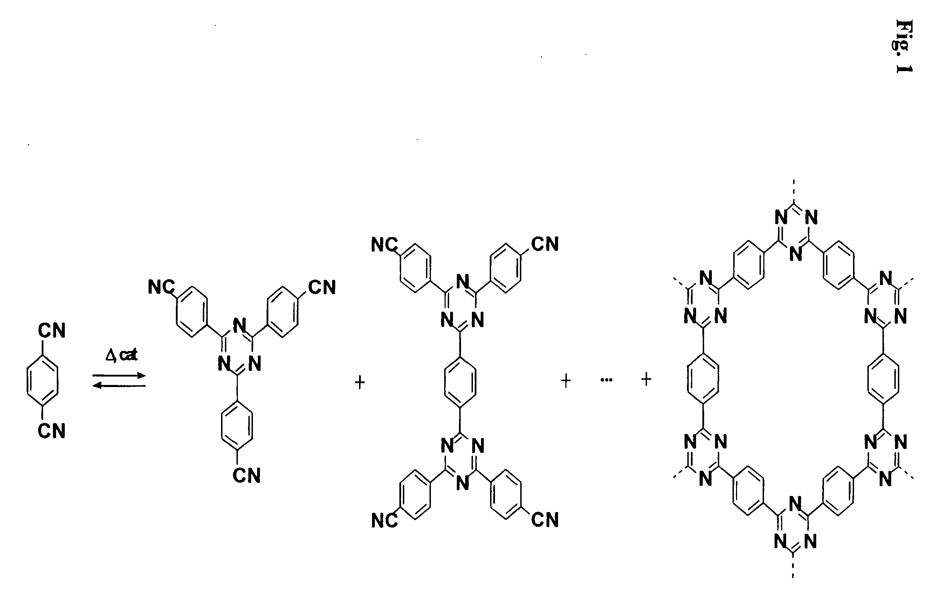

During the polymerization yielding the porous solid free cyano groups, which all belong to different cyano monomers or oligomers, will undergo a cyclotrimerization to give the porous solid, which consequently comprises triazine rings, in particular 1,3,5-triazine rings. To undergo the above polymerization reaction (condensation reaction), the at least two cyano groups in the cyano monomer molecules are preferably freely accessible, i.e. not sterically hindered. An idealized polymerizsation mechanism is shown in Fig. 1 for 1,4-dicyanobenzene as a starting compound. As one of average skill in the art will be aware, there will always be side reactions, in particular condensations, other than the cyclotrimerization affording 1,3,5-triazine rings, e.g. Diels-Alder-type reactions. Nevertheless, the scheme of Fig. 1 gives a picture of the mechanism leading to the formation of the porous solids of the invention.

The cyano monomers for use in the method of the invention are not particularly limited in kind. In the broadest aspect of the method of the invention, they can be represented by the following general formula (I):

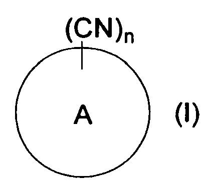

In formula (I), A means the rigid linking group. The index n indicating the number of cyano groups attached to the linking group A is ≥ 2, preferably 2, 3 or 4, more preferably 2 or 3, and most preferably 2. Preferably, all of the n cyano groups are capable of undergoing the cyclotrimerization reaction as described above.

The linking group A may be a spiro moiety or an adamantane moiety. Examples of cyano monomers containing this type of rigid linking group are shown below. Needless to mention, the present invention is not limited to these examples.

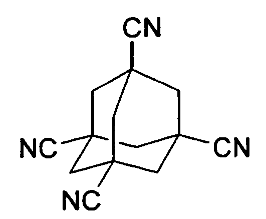

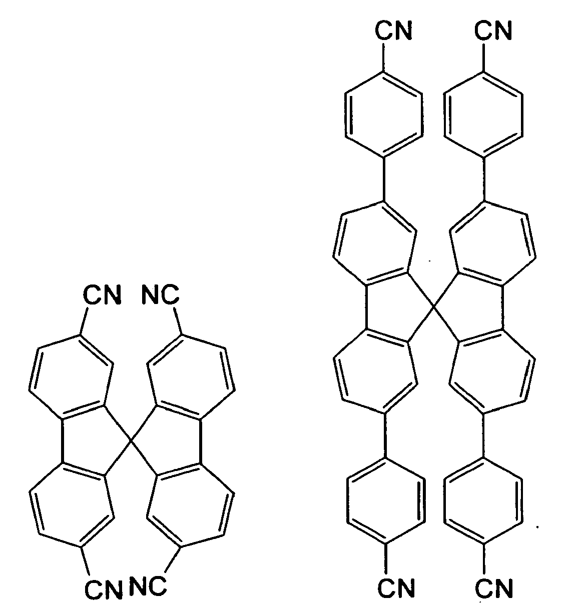

According to another embodiment, A represents an aromatic or heteroaromatic group, preferably having from 5 to 50, more preferably from 6 to 24, still more preferably from 6 to 18 ring atoms in total. The ring atoms may include, apart from carbon atoms, for instance, nitrogen, sulfur and oxygen atoms.

The aromatic or heteroaromatic linking group A may consist of an aromatic or heteroaromatic single ring. Preferably, the single ring is 5 or 6 membered, optionally containing hetero atoms such as N, S or O. For instance, the single ring linking group A may be benzene, pyridine, pyridazine, pyrimidine, pyrazine, thiophene, pyrrole and furane. In addition to the n cyano groups, the single ring linking group A may be substituted, e.g. by one or more halogen atoms (F, Cl, Br and I), one or more aryl groups (preferably C₆-C₁₄-aryl groups) or one or more C₁₋₆ alkyl groups. The above alkyl substituents may optionally be substituted. For instance, they may be present in the form of perfluoroalkyl groups. Examples of cyano monomers containing, as the rigid linking group, aromatic or heteroaromatic single rings are given below.

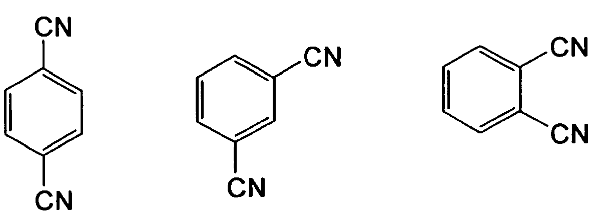

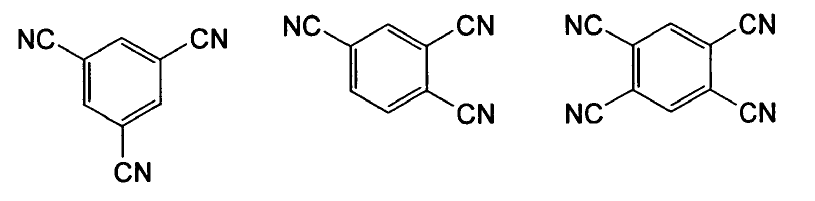

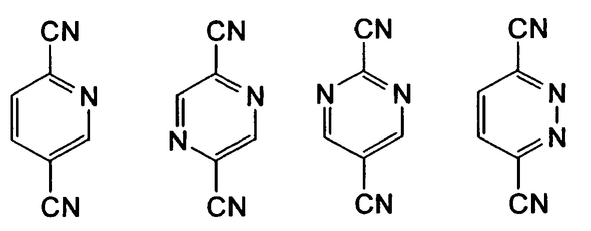

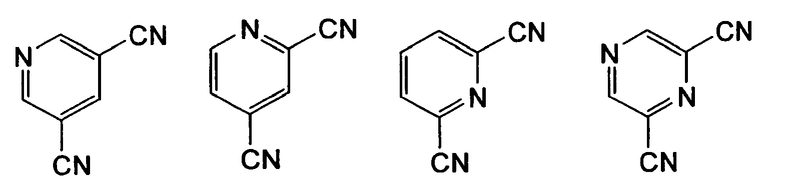

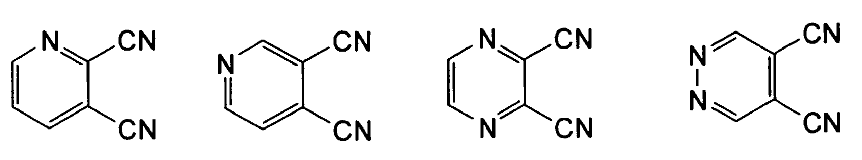

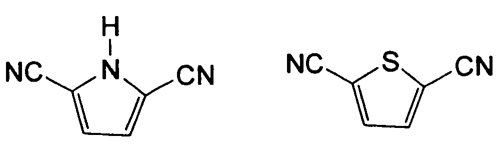

In the alternative, the (hetero)aromatic linking group A can be a fused ring system such as naphthalene, antracene or phenanthrene. If desired, the fused ring systems can contain hetero atoms and have substituents such as exemplified above for the single ring. Examples of cyano monomers containing the fused ring system-type of rigid linking group are shown below.

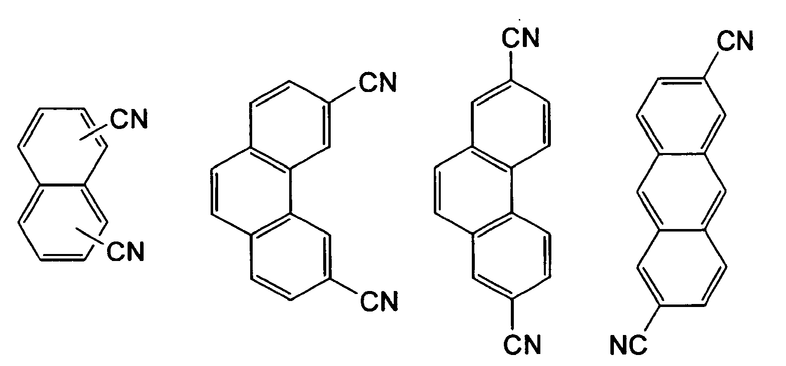

The above dicyanonaphthalene (see the left-hand formula) can for instance be substituted with the two cyano groups in 1,8-, 1,7-, 1,6-, 1,5-, 2,7- and 2,6-position. Further examples of this type of cyano monomers are the following:

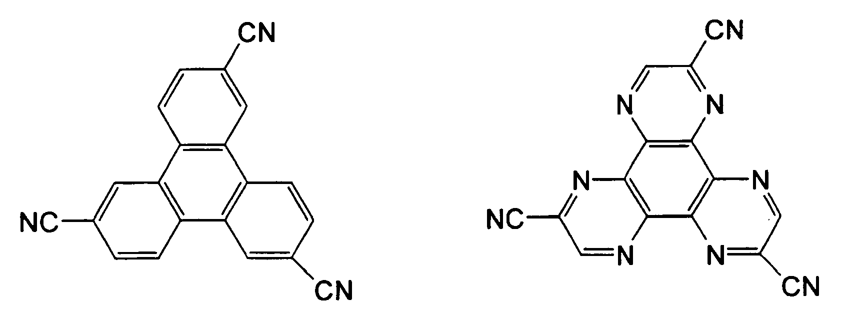

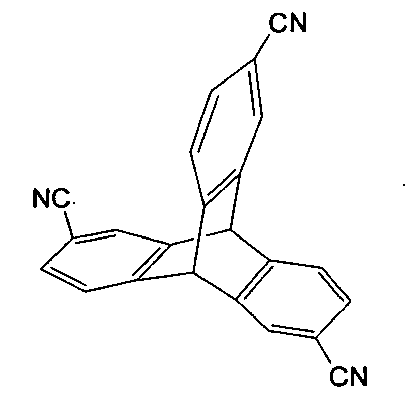

Finally, the rigid linking group A may comprise more than one rings (or fused ring systems) which are mutually connected e.g. by a single bond, a carbonyl group, an oxygen atom, or a nitrogen atom. Examples of corresponding cyano monomers are illustrated, hereinafter.

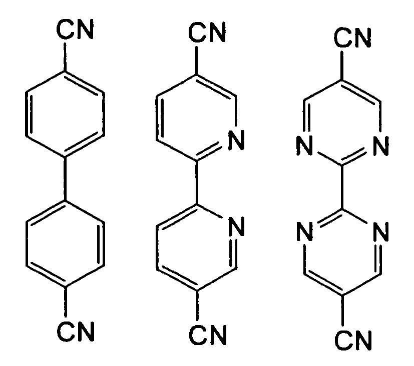

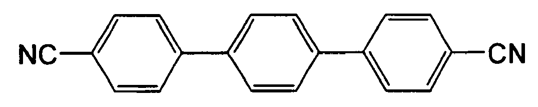

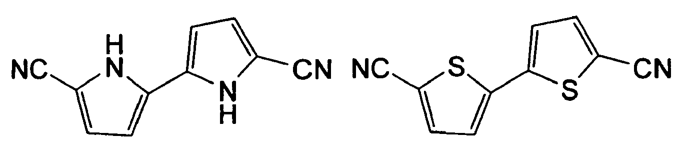

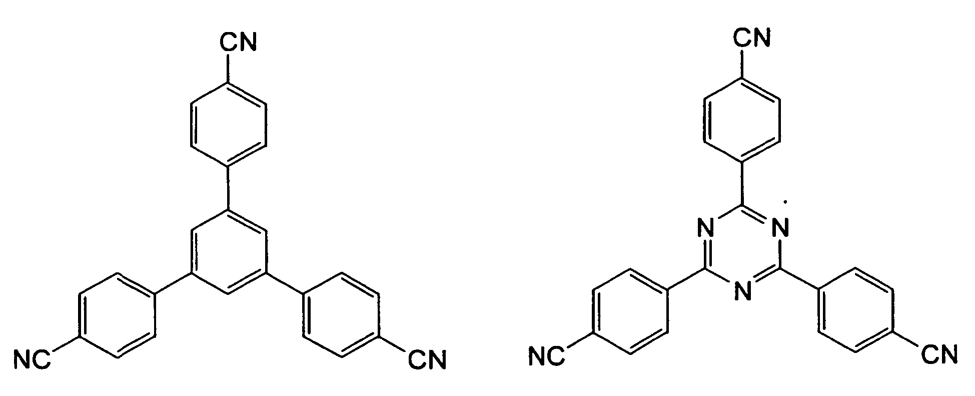

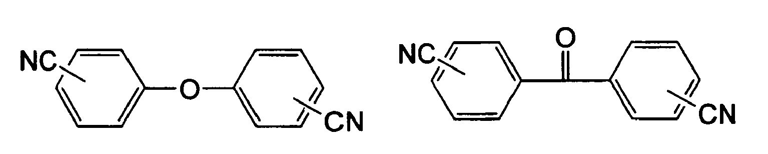

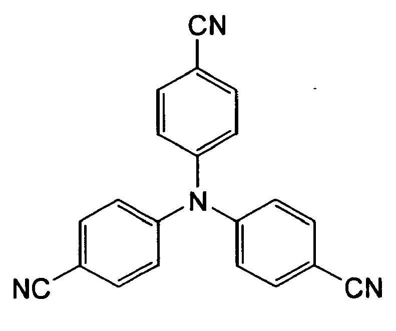

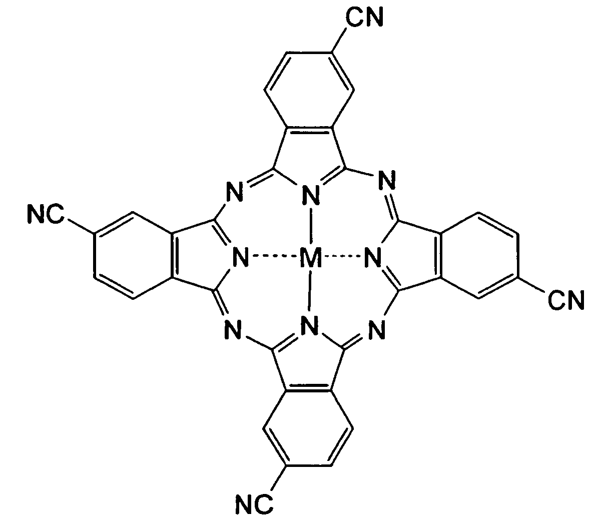

In the above formula, M may be 2 H⁺, 2 Li⁺, Cu²⁺, Zn²⁺ or Ni²⁺.

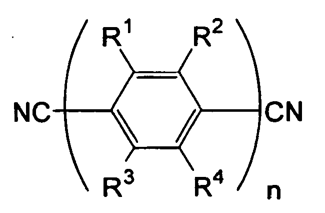

In the latter formula, R¹, R², R³ and R⁴ can be independently selected from hydrogen; halogen (F, Cl, Br, I); aryl, in particular C₆-C₁₄-aryl; and C₁₋₆ alkyl groups, in particular C₁₋₆-perfluoroalkyl groups.

In the method of the present invention, the cyano monomers shown above by way of their structural formula are used with preference, e.g. where the polymerization is carried out in a zinc chloride melt. More preferred are the cyano monomers employed in the working examples of this specification. The cyano monomers used in the present working examples are preferably subjected to the polymerization in accordance with the method of the invention in a salt melt of ZnCl₂. The most preferred cyano monomers are dicyanobenzenes, such as 1,3-and 1,4-dicyanobenzene. While mixtures of several types of cyano monomers can be used in the method of the invention, the use of a single kind of cyano monomer is preferred in view of the regularity of the obtained porous solid.

The solids which are obtainable by the preparation method of the invention are porous. The formation of the pores is illustrated in Fig. 1. The total pore volume of the materials may be in the range of ≥ 0.3 cm³/g. Preferably, the total pore volume is in the range of 0.3 to 2.5 cm³/g. More preferably, it is ≥ 1.5 cm³/g, such as in the range of 1.5 and 2.5 cm³/g. The porous solids of the invention may be microporous or mesoporous, and may additionally comprise macropores. As used herein, the pore sizes are defined in accordance with IUPAC Manual of Symbols and Terminology, Appendix 2, Part 1, Colloid and Surface Chemistry, Pure Appl. Chem. 1972, 31, pp. 587. That means, micropores have a width of less than 2 nm, mesopores of between 2 and 50 nm, and macropores of more than 50 nm.

Owing to their porosity, the BET specific surface area of the solids of the invention is ≥ 500 m²/g, such as 500 to 2500 m²/g, preferably it is ≥ 1000 m²/g, for instance between 1000 and 2500 m²/g.

In the solids of the invention, the porosity, specific surface area and functionality of the materials can be determined by selecting the cyano monomer, more specifically the rigid linking group in the cyano monomer that will remain in the final porous solid once the polymerization is completed. That means, by proper selection of the cyano monomer subjected to the polymerization reaction, the properties of the resultant solids can be tailor-made.

In the method of the invention, the polymerization of the cyano monomers is carried out in a salt melt or a eutectic mixture of salt melt containing, preferably consisting of, at least one Lewis acidic salt. Since the Lewis acidic salt (or mixture of more than one Lewis acidic salt) is used in the form of a salt melt, it can act as a solvent for the cyano monomers to be reacted, and at the same time catalyze the cyclotrimerization (i.e. polymerization) reaction. As such, the at least one Lewis acidic salt contained in or constituting the salt melt or eutectic mixture of salt melt is not specifically limited in kind. For instance, AlCl₃, FeCl₃, GaCl₃, TiCl₄, BCl₃, SnCl₄, SbCl₅, ZnCl₂ and ZnBr₂ can be used. Preferably, ZnCl₂ and/or ZnBr₂, are used, and most preferably ZnCl₂ is used.

For the purpose of the present specification, the term of "eutectic mixture" is intended to mean, in the case of binary systems, a mixture of a specific ratio of two compounds, such as Lewis acidic salts, which are not miscible in the solid state but completely miscible in the liquid state.

As the polymerization in the method of the present invention is carried out in a salt melt, the reaction temperature is preferably above the melting point of the used Lewis acidic salt(s) constituting the salt melt.

Generally, the polymerization reaction can be carried out at a temperature of from 250 to 500 °C provided a salt melt can be formed at that temperature. The reaction temperature is preferably 400 to 500 °C, and the reaction time, which depends on the reactivity of the cyano monomers, may be from 1 to 100 h, preferably 20 to 50 h, most preferably 25 to 40 h. The reaction can be carried out at ambient pressure or under vacuum, the latter being preferred. If desired, the reaction mixture can be agitated by conventional means, but this is unnecessary. While the reaction can be carried out in an open vessel, it is preferably carried out in a sealed vessel, in particular in an inert gas atmosphere (e.g. nitrogen or argon). These reaction conditions are preferred in that the evaporation of volatile cyano monomers, and the formation of zinc oxide side products can be suppressed. One of average skill in the art will select a suitable vessel material, such as Pyrex glass, quartz glass, stainless steel, or ceramics, which material will not be attacked by the salt melt reaction mixture. However, the vessel material is of no further relevance to the polymerization reaction.

The course of the polymerization reaction can be monitored by way of FT-IR. As the cyclotrimerization proceeds, the peak typical for CN (at a wave number slightly above 2200 cm⁻¹) shrinks, and bands in the range of 1350 to 1500 cm⁻¹, which are typical for 1,3,5-triazine, appear. This confirms the formation of a framework as illustrated in Fig. 1.

After the completion of the polymerization reaction has been confirmed, e.g. by way of FT-IR, the material can optionally be comminuted, e.g. ground in a mortar. Subsequently, the porous material can be washed, e.g. using water and/or acetone, and finally dried, for instance by heating, optionally under vacuum.

All in all, the method of the invention is simple and can give the desired porous materials in high yield.

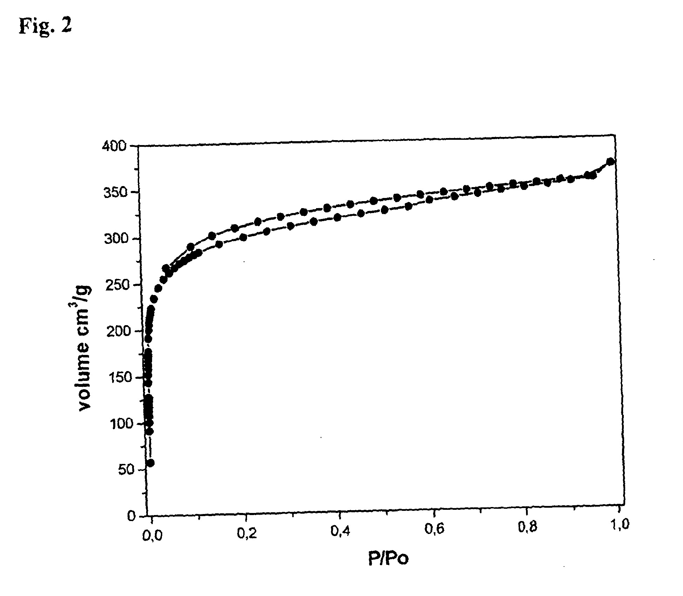

For the purpose of the present application, the BET (Brunauer-Emmett and Teller) specific surface area and the total pore volume of the materials were determined by way of nitrogen absorption analysis. Fig. 2 shows the absorption/desorption curve for the material obtained in Example 1. The absorption and desorption curve is not closed which is due to the nitrogen pressure exerted during the measurement and is typical for soft materials.

As mentioned earlier, in the present invention, different from the prior art, the polymerization is carried out in a salt melt of preferably zinc chloride, whereas merely catalytic amounts of zinc chloride were used in the prior art. Preferably, the molar ratio of the at least one Lewis acidic salt, and the cyano compound (e.g. ZnCl₂/cyano compound) is ≥ 0.5. More preferably the molar ratio is ≥ 5, even more preferably 5 to 35, and still more preferably 7 to 15. Under these conditions, porous materials in accordance with the invention can generally be obtained which are amorphous materials. In the present specification, the term "amorphous" means that there are no distinct reflections in the powder XRD pattern (WAXS pattern) of the material, when this recorded on a Bruker D8 Advance diffractometer using CuK_{α} (1.5405 Å) radiation. The acquisition time was 30 minutes for a 40° 2θ scan.

When the molar ratio of the Lewis acidic salt, in particular ZnCl₂, and the cyano monomers is kept within a range of 0.8 to 1.2, preferably 0.9 to 1.1, still more preferably about 1 (i.e. the salts constituting the melt and the cyano monomers are present in equimolar amounts), crystalline porous solids could be obtained, e.g. using 1,4-dicyanobenzene as the cyano compound. The crystalline solids represent another embodiment of the porous solids of the invention. Different from the amorphous materials, the powder XRD pattern of the crystalline materials, if measured under the above conditions, feature a distinct reflection at a diffraction angle corresponding to the pore wall distance. Simulated XRD powder patterns revealed a stacking of C₈H₄N₂ sheets in eclipsed conformation.

### EXAMPLES

The present invention is further illustrated by way of the following examples, which are however not to be construed as limiting the scope of the invention as defined in the appended claims.

The IR spectra were collected with a BIORAD FTS 6000 FTIR spectrometer, equipped with an attenuated total reflection (ATR) setup. Thermogravimetric analysis has been carried out using a NETZSCH TG209. The heating rate was 20 K/min. Transmission electron microscopy (TEM) images of microtomed samples were taken with a Zeiss EM 912Q at an acceleration voltage of 120 kV. Nitrogen adsorption data were obtained with a Quantachrome Autosorb-1 at liquid nitrogen temperature after having degassed the samples at 150 °C under high vacuum over night.

### Example 1: Polymerization of 1,4-Dicyanobenzene

A Pyrex ampoule (diameter: 3 cm, height: 12 cm) was charged with 1,4-diacyanobenzene (2.0 g, 15.6 mmol) and ZnCl₂ (15 g, 110.0 mmol) in a nitrogen atmosphere. The ampoule was evacuated (0.01 mbar) and subsequently sealed. The vial was then heated to 400 °C (10 °C/min) and maintained at this temperature for 40 h. After cooling to room temperature, the vial was opened, and the reaction mixture was discharged. The discharged reaction mixture was ground in a mortar and stirred in water (200 ml) for 4 h. The resulting powder was separated using a glass frit, washed with water (2 x 50 ml) and acetone (50 ml), and subsequently dried at 150 °C under vacuum for 15 h.
Yield: 1.8 g; 90 %.
Elemental analysis: C, 67.1; N, 17.45; H, 2.89 %; C/N (mol) = 4.48.
Calculated C₈H₄N₂: C, 75.0; N, 21,86; H, 3.15 %; C/N (mol) = 4.0.

TGA (O₂, 20-1000 °C, 10 °C min⁻¹): residual mass: 2.38 assigned to ZnO; corresponding to 3.99 % ZnCl₂.

The adsorption-desorption isotherm of the material is shown in Fig. 1.

### Example 2: Polymerization of 1,4-Dicyanobenzene

The reaction was carried out like in Example 1 except that the reaction vessel was a quartz ampoule, the reaction temperature was 500 °C, the reaction time was reduced to 25 h, and 1.0 g (7.8 mmol) 1,4-dicyanobenzene and 20.0 g ZnCl₂ (146.6 mmol) were used.

Yield: 0.86 g, 86 %.

### Example 3: Polymerization of 1,4-Dicyanobenzene

The reaction was carried out as described in Example 2, and the amount of reactants was 1.0 g (7.8 mmol) 1,4-dicyanobenzene, and 30.0 g (220.0 mmol) ZnCl₂.

Yield: 0.83 g, 83 %.

### Example 4: Polymerization of 1,4-Dicyanobenzene

The reaction was carried out as described in Example 1, except that 1.0 g (7.8 mmol) 1,4-dicyanobenzene and 1.0 g (7.3 mmol) ZnCl₂ were used. By way of WAXS powder patterns, it was confirmed that the obtained material was a crystalline material.

Yield: 0.92 g, 92 %.

Elemental analysis: C, 72.8; N, 19.30; H, 3.19 %; C/N (mol) = 4.4.
Calculated C₈H₄N₂: C, 75.0; N, 21.86; H, 3.15 %; C/N (mol) = 4.0.

### Example 5: Polymerization of 1,2-Dicyanobenzene

The reaction was carried out as described in Example 1, except that 1,2-dicyanobenzene (2.0 g, 15.6 mmol) and ZnCl₂ (15.0 g, 110 mmol) were used.

Yield: 1.9 g, 95 %.

Elemental analysis: C, 64.3; N, 12.97; H, 1.42 %; C/N (mol) = 5.78.
Calculated C₈H₄N₂: C, 75.0; N, 21.86; H, 3.15 %; C/N (mol) = 4.0.

### Example 6: Polymerization of 1,3-Dicyanobenzene

The reaction was carried out as described in Example 1, except that 1,3-dicyanobenzene (2.0 g, 15.6 mmol) and ZnCl₂ (15.0 g, 110.0 mmol) were used.

Yield: 1.8 g, 90 %.

Elemental analysis: C, 74.3; N, 13.93; H, 2.39 %; C/N (mol) = 6.22.
Calculated C₈H₄N₂: C, 75.0; N, 21.86; H, 3.15 %; C/N (mol) = 4.0.

### Example 7: Polymerization of 4,4'-Dicyanobiphenyl

Reaction was carried out as is described in Example 1, except that there was used 4,4'-dicyanobiphenyl (1.8 g, 8.8 mmol) and ZnCl₂ (15.0 g, 110.0 mmol).

Yield: 1.5 g, 83 %.

Elemental analysis: C, 84.2; N, 5.41; H, 2.18 %; C/N (mol) = 18.13.
Calculated C₁₄H₈N₂: C, 82.3; N, 13.72; H, 3.95 %; C/N (mol) = 7.0.

TGA (O₂, 20 - 1000 °C, 10 °C min⁻¹): 480 C (decomposition, 94.55 %); residual mass 2.89 %, assigned to ZnO; corresponding to 4.84 % ZnCl₂.

### Example 8: Polymerization of Tris(4-cyanophenyl)amine

The reaction was carried out as is described in Example 1, except that tris(4-cyanophenyl)amine (0.52 g, 1.62 mmol) and ZnCl₂ (6.6 g, 49 mmol) were used.

Yield: 0.51 g, 98 %.

Elemental analysis: C, 71.6; N, 7.94; H, 2.47 %; C/N (mol) = 10.5.
Calculated: C₂₁H₁₂N₄: C, 78.73; H, 3.78; N, 17.49; C/N (mol) = 5.25.

### Example 9: Polymerization of 1,3,5-Tris(4-cyanophenyl)benzene

The reaction was carried out as is described in Example 1, except that tris(4-cyanophenyl)benzene (0.2 g, 0.52 mmol) and ZnCl₂ (2.2 g, 15.6 mmol) were used.

Yield: 0.19 g, 95 %.

Elemental analysis: C, 71.7; N, 4.21; H, 3.34 %; C/N (mol) = 19.8.
Calculated: C₂₇H₁₅N3: C, 85.02; H, 3.96; N, 11.02; C/N (mol) = 9.0.

### Example 10: Polymerization of 1,3,5,7-tetra(4-cyanophenyl)adamantane

The reaction was carried out like in Example 1, using 1,3,5,7-tetra(4-cyanophenyl) admantane (0.5 g, 0.92 mmol) and ZnCl₂ (1.26 g, 9.2 mmol) at 500 °C for 25 h.

Yield: 0.41 g, 81 %.

Elemental analysis: C, 92.5; H, 2.38; N, 3.10.
Calculated for C₃₈H₂₈N₄: C, 84.42; H, 5.22; N, 10.36 %.

By way of sorption analysis, it was confirmed that all the materials obtained in the above examples are porous solids. For instance, in the case of Example 1, the material was primarily microporous (cf. Fig. 2), whereas the material was primarily mesoporous in the case of the polymer obtained in Example 7.

The results of the above examples are summarized in Table 1, below.

**Table 1**

| Example No. | Monomer | Temp. (°C) | Reaction time (h) | Yield (%) | Specific surface area (m²g⁻¹) | Molar ratio ZnCl₂ / cyano compound |
|---|---|---|---|---|---|---|
| 1 | 1,4-dicyano benzene | 400 | 40 | 90 | 1110 | 7.05 |
| 2 | 1,4-dicyano benzene | 500 | 25 | 86 | 1670 | 18.80 |
| 3 | 1,4-dicyano benzene | 500 | 25 | 83 | 1589 | 28.21 |
| 4 | 1,4-dicyano benzene | 400 | 40 | 92 | 1220 | 0.94 |
| 5 | 1,2-dicyano Benzene | 400 | 40 | 95 | 530 | 7.05 |
| 6 | 1,3-dicyano Benzene | 400 | 40 | 90 | 1505 | 7.05 |
| 7 | 4,4'-dicyano biphenyl | 400 | 40 | 83 | 2515 | 12.50 |
| 8 | Tris(4-cyano phenyl) amine | 400 | 40 | 98 | 827 | 30.25 |
| 9 | 1,3,5-tris(4-cyano phenyl) benzene | 400 | 40 | 95 | 1235 | 30.00 |
| 10 | 1,3,5,7-tetra(4-cyano-phenyl) adamantane | 500 | 25 | 81 | 1584 | 10.00 |

### Comparative Example 1: Acidic Polymerization of 4,4'-Dicyanobiphenyl

This Comparative Example was carried out in line with D.R. Anderson et al., J. Polym. Sci. part A: Polym. Chem. 1966, 4(7), 1689-1702. To 1.24 g (0.01 mole) of 4,4'-dicyanobiphenyl at 0°C was slowly added 50 ml of chlorosulfonic acid. The mixture was allowed to stand at room temperature for 48 h and was then poured onto cracked ice, filtered, and washed several times. The dark-coloured polymer was obtained in essentially a 100% yield. Nitrogen sorption measurement showed no porosity.

### Comparative Example 2: Polymerization of 1,4-Dicyanobenzene using catalytic amounts of ZnCl₂

This Comparative Example was carried out in line with US 3,775,380. 1,4-dicyanobenzene (1g, 7.8 mmol) and ZnCl₂ (0.1g, 0.73 mmol) were finely ground in a mortar under an inert atmosphere, and transferred in a pyrex ampoule. The ampoule was heated at 400°C for 40 h. The brownish product was ground, washed with water and dried. It was obtained in essentially a 100% yield. Nitrogen sorption measurement showed no porosity.

As shown in the above examples, the solids of the invention exhibit a high porosity as evidenced by their high BET specific surface area, and can be prepared by a simple method.

## Claims

1. A method of preparing porous solids, which method comprises polymerizing, in a salt melt or an eutectic mixture of salt melt containing at least one Lewis acidic salt, cyano monomers having at least two cyano groups in their molecule, wherein the at least two cyano groups are bonded to a rigid linking group in the cyano monomer.

2. The method according to Claim 1, wherein the salt melt or eutectic mixture of salt melt consists of at least one Lewis acidic salt.

3. The method according to Claim 1 or 2, wherein the polymerization is carried out in a salt melt of ZnCl₂.

4. The method according to any one of Claims 1 to 3, wherein the cyano monomers have two, three or four cyano groups, preferably two cyano groups in their molecule.

5. The method according to Claim 4, wherein the cyano monomers are dicyanobenzenes.

6. The method according to any one of the preceding claims, wherein the molar ratio of the at least one Lewis acidic salt, and the cyano monomers is ≥ 0.5, preferably ≥ 5.

7. The method according to Claim 6, wherein the molar ratio is in the range of 0.8 to 1.2, preferably 0.9 to 1.1.

8. The method according to any one of the preceding claims, wherein the polymerization is carried out at a temperature of 400 to 500 °C.

9. The method according to any one of the preceding claims, wherein the rigid linking group in the cyano monomers is an aromatic group.

10. A porous solid obtainable by the method according to any one of Claims 1 to 9.

11. The porous solid according to Claim 10, which has a BET specific surface area of ≥ 500 m²/g, preferably ≥ 1000 m²/g.

12. The porous solid according to Claim 10 or 11, which has a total pore volume of ≥ 0.3 cm³/g.

13. A use of a porous solid as defined in any one of Claims 10 to 12, as a sorbent material, filtering material, insulating material, or as a catalyst carrier.

## Patentansprüche

1. Verfahren zur Herstellung von porösen Feststoffen, wobei das Verfahren die Polymerisation von Cyanomonomeren mit mindestens zwei Cyanogruppen in ihrem Molekül, wobei die mindestens zwei Cyanogruppen an eine starre Verknüpfungsgruppe in dem Cyanomonomer gebunden sind, in einer Salzschmelze oder einer eutektischen Mischung von Salzschmelze, die mindestens ein Lewis-saures Salz enthält, umfaßt.

2. Verfahren gemäß Anspruch 1, bei dem die Salzschmelze oder eutektische Mischung der Salzschmelze aus mindestens einem Lewis-sauren Salz besteht.

3. Verfahren gemäß Anspruch 1 oder 2, bei dem die Polymerisation in einer Salzschmelze von ZnCl₂ durchgeführt wird.

4. Verfahren gemäß mindestens einem der Ansprüche 1 bis 3, bei dem die Cyanomonomere zwei, drei oder vier Cyanogruppen, vorzugsweise zwei Cyanogruppen in ihrem Molekül haben.

5. Verfahren gemäß Anspruch 4, bei dem die Cyanomonomere Dicyanobenzole sind.

6. Verfahren gemäß mindestens einem der vorhergehenden Ansprüche, bei dem das Molverhältnis des mindestens einen Lewis-sauren Salzes und der Cyanomonomere ≥ 0,5 vorzugsweise ≥ 5 ist.

7. Verfahren gemäß Anspruch 6, bei dem das Molverhältnis im Bereich von 0,8 bis 1,2, vorzugsweise 0,9 bis 1,1 liegt.

8. Verfahren gemäß mindestens einem der vorhergehenden Ansprüche, bei dem die Polymerisation bei einer Temperatur von 400 bis 500°C durchgeführt wird.

9. Verfahren gemäß mindestens einem der vorhergehenden Ansprüche, bei dem die starre Verknüpfungsgruppe in den Cyanomonomeren eine aromatische Gruppe ist.

10. Poröser Feststoff, erhältlich mit dem Verfahren gemäß mindestens einem der Ansprüche 1 bis 9.

11. Poröser Feststoff gemäß Anspruch 10, der eine spezifische BET-Oberfläche von ≥ 500 mg²/g, vorzugsweise von ≥ 1.000 m²/g hat.

12. Poröser Feststoff gemäß Anspruch 10 oder 11, der ein Gesamtporenvolumen von ≥ 0,3 cm³/g hat.

13. Verwendung eines porösen Feststoffs wie in mindestens einem der Ansprüche 10 bis 12 definiert, als Sorbensmaterial, Filtermaterial, Isolationsmaterial oder als Katalysatorträger.

## Revendications

1. Procédé de préparation de solides poreux, lequel procédé comprend la polymérisation, dans un sel fondu ou un mélange eutectique de sels fondus contenant au moins un sel acide de Lewis, de monomères cyano ayant au moins deux groupes cyano dans leur molécule, dans lequel les au moins deux groupes cyano sont liés à un groupe de liaison rigide dans le monomère cyano.

2. Procédé selon la revendication 1, dans lequel le sel fondu ou le mélange eutectique de sels fondus consiste en au moins un sel acide de Lewis.

3. Procédé selon la revendication 1 ou 2, dans lequel la polymérisation est effectuée dans un sel fondu de ZnCl₂.

4. Procédé selon l'une quelconque des revendications 1 à 3, dans lequel les monomères cyano ont deux, trois ou quatre groupes cyano, préférablement deux groupes cyano dans leur molécule.

5. Procédé selon la revendication 4, dans lequel les monomères cyano sont des dicyanobenzènes.

6. Procédé selon l'une quelconque des revendications précédentes, dans lequel le rapport molaire de l'au moins un sel acide de Lewis, et des monomères cyano est ≥ 0,5, préférablement ≥ 5.

7. Procédé selon la revendication 6, dans lequel le rapport molaire est dans la plage de 0,8 à 1,2, préférablement 0,9 à 1,1.

8. Procédé selon l'une quelconque des revendications précédentes, dans lequel la polymérisation est effectuée à une température de 400 à 500°C.

9. Procédé selon l'une quelconque des revendications précédentes, dans lequel le groupe de liaison rigide dans les monomères cyano est un groupe aromatique.

10. Solide poreux pouvant être obtenu par le procédé selon l'une quelconque des revendications 1 à 9.

11. Solide poreux selon la revendication 10, qui a une surface spécifique BET ≥ 500 m²/g, préférablement ≥ 1 000 m²/g_{.}

12. Solide poreux selon la revendication 10 ou 11, qui a un volume total de pores ≥ 0,3 cm³/g.

13. Utilisation d'un solide poreux tel que défini dans l'une quelconque des revendications 10 à 12, comme une matière sorbante, un matière filtrante, une matière isolante, ou comme un support de catalyseur.
